# EUROPÄISCHE PATENTSCHRIFT

(11) **EP 1 711 308 B1**
(45) Veröffentlichungstag und Bekanntmachung des Hinweises auf die Patenterteilung: **26.09.2007**
(21) Anmeldenummer: 04804617.1
(22) Anmeldetag: 30.11.2004
(51) Int. Cl.: B23Q 11/04, F16P 3/00, H02H 7/085

(54) **VERFAHREN ZUR ABSCHALTUNG EINER ELEKTROWERKZEUGMASCHINE IN EINEM BLOCKIERFALL UND ELEKTROWERKZEUGMASCHINE**
METHOD FOR SWITCHING OFF AN ELECTRIC MACHINE TOOL WHEN BLOCKED, AND AN ELECTRIC MACHINE TOOL
PROCEDE POUR DECONNECTER UNE MACHINE-OUTIL ELECTRIQUE EN CAS DE BLOCAGE ET MACHINE-OUTIL ELECTRIQUE

(30) Priorität: 28.01.2004 DE 102004004170
(43) Veröffentlichungstag der Anmeldung: 18.10.2006
(73) Patentinhaber: ROBERT BOSCH GMBH, 70442 Stuttgart (DE)
(72) Erfinder: WIKER, Juergen, 70771 Leinfelden-Echterdingen (DE); HAHN, Dietmar, 70839 Gerlingen (DE); PAULI, Mario, 74831 Gundelsheim (DE); WALTER, Roland, 75233 Tiefenbronn (DE); HEILMANN, Andreas, 72124 Pliezhausen (DE)
(86) Internationale Anmeldenummer: PCT/EP2004/053181
(87) Internationale Veröffentlichungsnummer: WO 2005/072908

(56) Entgegenhaltungen:
- US-A- 4 249 117
- US-A- 4 267 914
- US-B1- 6 479 958

## Beschreibung

### Stand der Technik

Die Erfindung geht aus von einem Verfahren zur Abschaltung einer Elektrowerkzeugmaschine in einem Blockierfall sowie von einer Elektrowerkzeugmaschine nach den Oberbegriffen der Ansprüche 1 und 10.

Elektrowerkzeugmaschinen mit digitaler Steuerung sind bekannt. Die Veränderung der Spannung des Antriebsmotors erfolgt bei netzbetriebenen Elektrowerkzeugmaschinen beispielsweise über eine Phasenanschnittsteuerung, während bei akku- oder batteriebetriebenen Elektrowerkzeugmaschinen üblicherweise eine Pulsweitenmodulation verwendet wird. Bei verschiedenen Einsatzzwecken kann es leicht zu einem Verklemmen eines Werkzeugs im Werkstück kommen, was zu einer Drehbewegung oder einer Rückschlagbewegung ("Kick-Back") der Elektrowerkzeugmaschine und einem daraus folgenden Verlust der Kontrolle über die Elektrowerkzeugmaschine führen kann. Es sind verschiedene Systeme und Verfahren bekannt, mit dem eine derartige Dreh- und/oder Rückschlagbewegung der Elektrowerkzeugmaschine beim Blockieren des Werkzeugs verhindert werden kann. So sind Anti-Rotationssysteme bekannt sowie Verfahren, bei denen der Drehzahlverlauf des Antriebsmotors oder des Werkzeugs als Funktion der Zeit ausgewertet wird.

Aus der US 4,267,914 ist eine Elektrowerkzeugmaschine bekannt, bei der bei einem Drehzahlabfall unterhalb eines vorgebbaren festen oder variablen Schwellenwerts, der als Blockierfall erkannt wird, der Antriebsmotor abgeschaltet und/oder eine Bremse aktiviert wird.

### Vorteile der Erfindung

Es wird vorgeschlagen, dass bei einem Verfahren zur Abschaltung eines Antriebsmotors einer Elektrowerkzeugmaschine in Abhängigkeit von einem variablen Schwellenwert der Schwellenwert in zumindest einem vorgegebenen Zeitintervall in Abhängigkeit von einer aktuellen Lastdrehzahl und einer Leerlaufdrehzahl bestimmt wird. Der Schwellenwert kann als Drehzahlsignal, als zeitliche Ableitung einer Drehzahl und/oder als drehzahlabhängiger Tabellenwert bestimmt werden. Die Abschaltung des Antriebsmotors abhängig von einem variabel ermittelten Schwellenwert erfolgt automatisch angepasst an dessen momentanen Lastfall bzw. Arbeitsfall. Besonders günstig lässt sich die Erfindung in Elektrowerkzeugmaschinen mit einer digitalen Steuerung realisieren, bei der das Verfahren durch einen in einem Speichermedium hinterlegten Algorithmus umgesetzt werden kann. Bei Elektrowerkzeugmaschinen mit zusätzlicher Drehzahlvorwahl ist keine Änderung an dem entsprechenden Algorithmus einer entsprechenden Steuereinheit notwendig. Vorteilhaft können hier weitere Betriebsparameter der Elektrowerkzeugmaschine mit berücksichtigt werden, wie etwa ein Getriebe, eine Übersetzung, ein Massenverhältnis der Elektrowerkzeugmaschine und/oder andere, auf den Bearbeitungsvorgang Einfluss nehmende, vorzugsweise maschinenbezogene Größen.

Bevorzugt wird der Schwellenwert in zumindest einem vorgegebenen Zeitintervall in Abhängigkeit von einem Drehzahlverhältnis aus der aktuellen Lastdrehzahl und der Leerlaufdrehzahl bestimmt. Ergibt eine Beobachtung eines aktuellen Drehzahlsignals, dass der Schwellenwert erreicht oder überschritten ist, wird dies als Blockierfall erkannt und der Antriebsmotor sofort von seiner Energieversorgung getrennt. Dadurch kann ein unkontrolliertes Bewegen der Elektrowerkzeugmaschine und die damit verbundenen Gefahren vermieden werden. Optional kann auch ein aktuelles Drehzahländerungssignal beobachtet und geprüft werden, ob ein Schwellenwert bezüglich der Drehzahländerung erreicht oder überschritten ist. Ein Überschreiten des Schwellenwerts bedeutet im Fall eines Drehzahlsignals, dass eine Differenz einer aktuelle Lastdrehzahl in zwei aufeinander folgenden Zeitintervallen größer ist als der Schwellenwert und im Fall einer Drehzahländerung, dass die aktuelle Drehzahländerung größer ist als der entsprechende Schwellenwert, d.h. die Änderung ist steiler als zulässig.

Vorzugsweise wird der Schwellenwert als Produkt aus dem Drehzahlverhältnis und einem Ausgangswert gebildet. Der Ausgangswert kann ein vorgegebener Startwert sein oder bevorzugt derjenige Schwellenwert, der im vorangegangenen Zeitintervall bestimmt wurde. Der Ausgangswert kann ein Drehzahl sein oder eine Drehzahländerung, insbesondere ein Drehzahlabfall. Ein günstiges Zeitintervall ist beispielsweise eine Halbwelle einer Netzfrequenz bei netzbetriebenen Elektrowerkzeugmaschinen. Bei netzunabhängig betriebenen Elektrowerkzeugmaschinen kann ein Zeitintervall, beispielsweise durch eine Quarz- oder RC-(Widerstands-Kapazitäts)-Oszillatorschaltung, künstlich erzeugt werden.

Alternativ kann der Schwellenwert als auf die Leerlaufdrehzahl genormte zeitliche Änderung einer Drehzahl gebildet werden. Dabei wird eine zeitliche Ableitung einer aktuellen Lastdrehzahl des Gesamtsystems mit einem Schwellenwert, genormt auf eine Leerlaufdrehzahl, verglichen. In den Schwellenwert geht als Sollwert die Leerlaufdrehzahl ein, die vorgegeben oder vorgewählt wird, sowie weitere Betriebsparameter der Elektrowerkzeugmaschine, wie Getriebe, Massenverhältnis und dergleichen. Daraus wird eine theoretisch zulässige zeitliche Änderung des Drehzahlsignals bestimmt, mit der die aktuelle Änderung der Lastdrehzahl verglichen wird. Dabei kann auch vorgesehen sein, dass Einflussgrößen für die Schwellenwertbestimmung bzw. den Sollwert berücksichtigt werden, die auf einen individuellen Bediener zurückgehen, beispielsweise dessen Bedienkraft oder ob sensibel oder robust gearbeitet wird..

Alternativ kann zur Abschaltung eines Antriebsmotors einer Elektrowerkzeugmaschine in einem Blockierfall des Werkzeugs eine aktuelle Lastdrehzahl mit einem Werteintervall einer Tabelle zu vergleichen und den neuen Schwellenwert zuzuordnen. Die Tabelle enthält vorzugsweise Drehzahlschwellenwerte in Abhängigkeit von einer Leerlaufdrehzahl und einer Lastdrehzahl. Die genauen Parameter hängen von der jeweiligen Elektrowerkzeugmaschine ab und werden zweckmäßigerweise empirisch ermittelt. Vorzugsweise wird bei niedrigen Lastdrehzahlen der Schwellenwert abhängig von einem wählbaren Faktor herabgesetzt. Dann kann beispielsweise eine Bedienkraft oder ein Komfortbedürfnis des Bedieners berücksichtigt werden. Der Faktor kann über einen Wählschalter vorgegeben werden. Der Schwellenwert kann dabei beispielsweise überproportional oder unterproportional herabgesetzt werden. Alternativ dazu kann auch ein Lemalgorithmus in einer entsprechenden Steuereinheit vorgesehen sein.

Zweckmäßig ist jeweils, den Schwellenwert, insbesondere nach der Multiplikation, auf eine ganze Zahl zu runden. Weiterhin ist günstig, wenn in die Bestimmung des Schwellenwerts eine Soll-Ist-Abweichung eines Drehzahlreglers, ein Ausregelungsgrad des Drehzahlreglers und/oder eine mechanische Zeitkonstante der Elektrowerkzeugmaschine eingeht.

Der Blockierfall kann auf einfache Weise bestimmt werden, indem Drehzahlimpulse in zwei aufeinander folgenden ersten und zweiten Zeitintervallen gezählt, die Impulse des zweiten Zeitintervalls von den Impulsen des ersten Zeitintervalls abgezogen werden und bei einer Differenz größer als der Schwellenwert der Antriebsmotor abgeschaltet wird.

Für eine komfortable Anpassung an einen aktuellen Lastfall ist günstig, den Schwellenwert mit einer Soll-Ist-Abweichung eines Drehzahlreglers und/oder einer mechanischen Zeitkonstante der Elektrowerkzeugmaschine und/oder Betriebsparametern der Elektrowerkzeuge zu wichten.

Es wird weiterhin eine Elektrowerkzeugmaschine mit einem durch einen Antriebsmotor antreibbaren Werkzeug vorgeschlagen, die für die Bestimmung des Schwellenwertes in zumindest einem vorgegebenen Zeitintervall in Abhängigkeit von einer aktuellen Lastdrehzahl und einer Leerlaufdrehzahl Mittel wie Detektionseinheiten und/oder Recheneinheiten umfasst. Günstigerweise umfassen die Mittel einen

Mikrokontroller, der mit einer Drehzahlerfassungseinheit und einem Drehzahlregler verbunden ist, wobei der Schwellenwert variabel aus einem Drehzahlsignal und/oder einem Drehzahländerungssignal der Drehzahlerfassungseinheit sowie einer Soll-Ist-Abweichung eines Drehzahlreglers und/oder eines Ausregelungsgrads des Drehzahlreglers und/oder einer mechanischen Zeitkonstante der Elektrowerkzeugmaschine bestimmbar ist. Damit kann auf zuverlässige Weise ein aktueller Lastfall oder Arbeitsfall der Elektrowerkzeugmaschine berücksichtigt werden. Zweckmäßig ist, wenn die Mittel eine drehzahlbeeinflussende Elektronikeinheit zum Steuern einer Motorspannung und/oder eines Motorstroms umfassen.

Die Erfindung ist günstig für Elektrowerkzeugmaschinen mit digitaler Steuerung und eignet sich insbesondere für Elektrowerkzeugmaschinen mit Werkzeugen, die sich verklemmen können, beispielsweise solche mit drehend angetriebenen Werkzeugen, wie Bohrern mit und ohne Schlag, Sägen und dergleichen.

### Zeichnungen

Die Erfindung wird nachfolgend in einem Ausführungsbeispiel anhand der zugehörigen Zeichnungen näher erläutert. Es zeigen:
- Fig. 1: schematisch eine Schaltung einer Elektrowerkzeugmaschine zur Erfassung eines Blockierfalls;
- Fig. 2 a, b: einen Spannungsverlauf als Funktion der Zeit (a) und korrespondierende Impulse eines Tachogenerators als Funktion der Zeit (b);
- Fig. 3: einen Drehzahlverlauf als Funktion der Zeit;
- Fig.4: ein Flussdiagramm zur Bestimmung eines Blockierfalls nach einem bevorzugten Verfahren; und
- Fig. 5: ein Flussdiagramm zur alternativen Bestimmung eines Blockierfalls nach einem bevorzugten Verfahren.

### Beschreibung der Ausführungsbeispiele

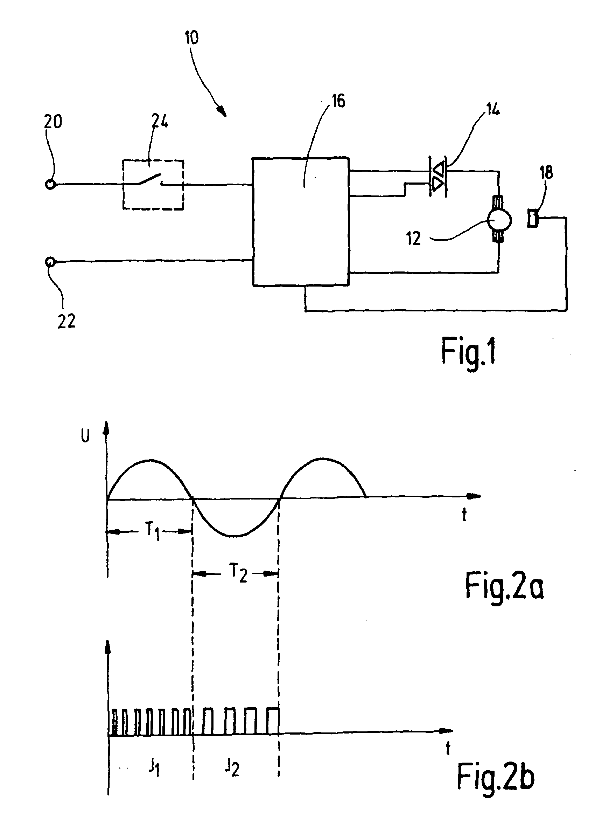

Fig. 1 zeigt schematisch eine Schaltung 10 einer Elektrowerkzeugmaschine zur Erfassung eines Blockierfalls. Die Schaltung umfasst Mittel zum Detektieren und/oder Berechnen eines von mindestens zwei Variablen abhängigen Schwellenwerts E₁, der als Kriterium für die Detektion eines Blockierfalls und ein Abschalten eines Antriebsmotors 12 dient.

Eine effektive elektrische Spannung U über einem Antriebsmotor 12 wird mittels eines Leistungshalbleiterbauelements 14, beispielsweise ein Triac, ein Thyristor oder, besonders bei netzunabhängigen Elektrowerkzeugmaschinen, ein Feldeffekttransistor, eingestellt, der wiederum über eine Mikrokontrollereinheit 16 angesteuert wird. Die Mikrokontrollereinheit 16 erhält ein Drehzahlsignal über eine Drehzahlerfassungseinheit 18, etwa einen als Tachogenerator ausgebildeten Drehzahlsensor oder eine Drehzahlerfassungsschaltung, indem eine Winkelgeschwindigkeit einer Motorwelle des Antriebsmotors 12 oder eines geeigneten Bauteils über einen entsprechenden Geber, beispielsweise ein Magnetrad, erfasst wird. Wird ein Blockierfall eines Werkzeugs der Elektrowerkzeugmaschine erkannt, wird ein Schalter 24 in einem elektrischen Stromkreis des Antriebsmotors 12 geöffnet und der Antriebsmotor 12 stromlos geschaltet. Um ein Blockieren des Werkzeugs zu erkennen, wird in geeigneten Zeitintervallen das Drehzahlsignal n₁ ausgewertet.

Fig. 2 a, b zeigt beispielhaft ein Drehzahlsignal bei einer Drehzahlverringerung von einer Anzahl von Impulsen J₁ einem Intervall T₁ zu einer Anzahl von Impulsen J₂ in einem Intervall T₂. Ein Zeitintervall T₁, T₂ entspricht jeweils einer Halbwelle der Netzfrequenz. In einer Steuereinheit, die vorzugsweise in der Mikrokontrollereinheit 16 implementiert ist, wird die Anzahl von Impulsen J₂ von der Anzahl von Impulsen J₁ abgezogen. Ergibt sich eine Differenz, die größer ist als ein vorher errechneter Schwellenwert E₁, so schaltet die Mikrokontrollereinheit 16 den Antriebsmotor 12 mittels des Leistungshalbleiterbauelements 14 ab. Nach dem Detektieren des Blockierfalls wird das Elektrowerkzeug sofort von der Energiezufuhr getrennt.

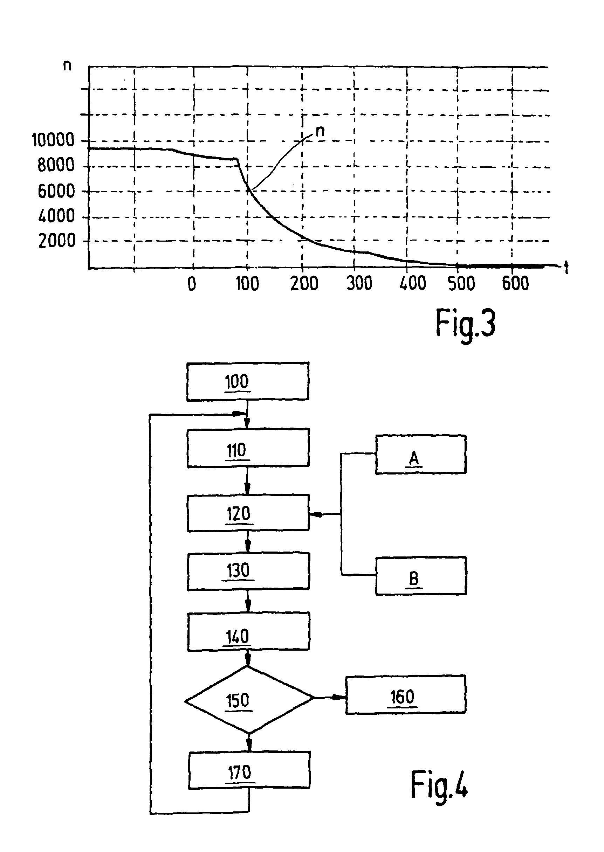

Fig. 3 zeigt ein typisches Beispiel für einen Drehzahlverlauf als Funktion der Zeit beim Blockieren eines Werkzeugs einer Elektrowerkzeugmaschine. Die Drehzahl verringert sich nichtlinear, und die Drehzahlverringerung als Funktion der Zeit ist bei unterschiedlichen Ausgangswerten der Drehzahl jeweils verschieden. Praxisbezogen bedeutet dies, dass abhängig vom Verhältnis Lastdrehzahl n₁ zu einer vorgewählten oder fest vorgegebenen Leerlaufdrehzahl n₀ der Elektrowerkzeugmaschine ein variabler Schwellenwert E₁ diesen nichtlinearen Drehzahlabfall automatisch berücksichtigt, wobei gemäß einem bevorzugten Ausführungsbeispiel der Erfindung der Schwellenwert E₁ in Abhängigkeit von dem Drehzahlverhältnis n₁/ n₀ bestimmt wird.

Fig. 4 zeigt ein Flussdiagramm zur Bestimmung eines Blockierfalls mit Schritten 100, 110, 120, 130, 140, 150, 160, 170. Der Ablauf kann beispielsweise als Algorithmus in einer Steuereinheit der Elektrowerkzeugmaschine hinterlegt sein. Zunächst wird in Schritt 100 während eines Zeitintervalls T₁ die Zahl der Drehzahlimpulse J₁, die z.B. von einem Drehzahlsensor detektiert werden, bestimmt und abgespeichert. Wird beispielsweise ein Magnetrad als Drehzahlsensor verwendet, verursacht eine volle Umdrehung des Magnetrads so viele Impulse J wie das Magnetrad Zähne aufweist. Im nächsten Schritt 110 wird daher eine aktuelle Lastdrehzahl n₁ aus der Zahl der gezählten Impulse J₁ berechnet. Im nächsten Schritt 120 folgt die Zuordnung des Schwellenwerts E₁ zur aktuellen Lastdrehzahl n₁. Dies kann auf mehrere Arten erfolgen, die durch Blöcke A, B dargestellt sind.

In Block A wird die aktuelle Lastdrehzahl n₁ mit einer Leerlaufdrehzahl n₀ des Gesamtsystems der Elektrowerkzeugmaschine verglichen und der Quotient gebildet, der das Drehzahlverhältnis n₁/n₀ angibt. Das Drehzahlverhältnis n₁/n₀ wird mit einem Ausgangswert E₀ multipliziert und damit der neue Schwellenwert E₁ für das aktuelle Zeitintervall T₁ bestimmt. Der Ausgangswert E₀ kann zu Beginn als Startwert vorgegeben werden, und anschließend kann jeweils ein in einem vorhergehenden Zeitintervall Tₙ₋ₓ berechnete Schwellenwert E₁ als Ausgangswert E₀ in einem aktuellen Zeitintervall Tₙ gesetzt werden.

In einer bevorzugten alternativen Ausgestaltung kann in Block B eine aktuelle Lastdrehzahl n₁ mit einem Werteintervall einer Tabelle verglichen dabei der jeweilige neue Schwellenwert E₁ zugeordnet werden. Die Tabelle ist vorzugsweise in einem Speicherbaustein einer Steuereinheit der Elektrowerkzeugmaschine hinterlegt. Die Tabelle enthält empirisch bestimmte Drehzahlabschaltwerte als Schwellenwerte in Abhängigkeit der Leerlaufdrehzahl und der aktuellen Lastdrehzahl. Der Leerlaufdrehzahl kann beispielsweise abhängig von einem Arbeitsfall oder von einem verwendeten Werkzeug sein. Ferner kann insbesondere das Gefühl eines Bedieners oder dessen Bedienkraft und dergleichen berücksichtigt werden, indem beispielsweise bei niederen Lastdrehzahlen n₁ der Schwellenwert E₁ überproportional oder unterproportional herabgesetzt wird.

Der in Block A oder B berechnete Schwellenwert E₁ wird Schritt 120 übergeben und dem aktuellen Lastdrehzahl n₁ zugeordnet.

Im nächsten Schritt 130 wird während des auf das erste Zeitintervall T₁ folgende zweite Zeitintervalls T₂ die Zahl der Drehzahlimpulse J₂, die z.B. von einem Drehzahlsensor detektiert werden, bestimmt und abgespeichert. Dann wird im nächsten Schritt 140 eine aktuelle Lastdrehzahl n₂ aus der Zahl der gezählten Impulse J₂ berechnet.

Im nächsten Schritt 150 wird die Differenz n₁-n₂ zwischen der Drehzahl n₁ in dem ersten Zeitintervall T₁ und der Lastdrehzahl n₂ im zweiten Zeitintervall T₂ gebildet. Ist die Differenz n₁-n₂ größer als der Schwellwert E₁, wird in Schritt 160 der Antriebsmotor abgeschaltet. Ist die Differenz n₁-n₂ nicht größer als E₁, wird in Schritt 170 die Zahl der Drehzahlimpulse J₁=J₂ gesetzt. Weiterhin kann der Schwellenwert E₁ gleich E₀ gesetzt und als Ausgangswert E₀ in den Verfahrensablauf zwischen Schritt 100 und Schritt 110 zurückgeführt werden.

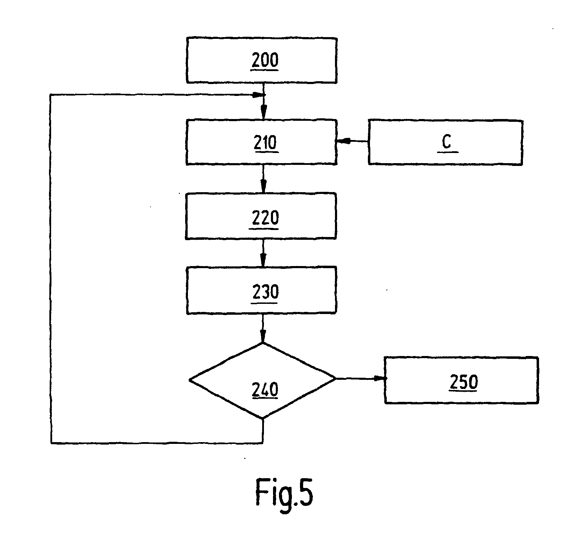

In einer weiteren bevorzugten alternativen Ausgestaltung kann, wie in Fig. 5 dargestellt, ein variabler Schwellenwert E₁=dn/dt bestimmt werden, indem in einem Schritt 210 eine zeitliche Ableitung dn/dt eines Grenzwerts, genormt auf die Leerlaufdrehzahl n₀, bestimmt wird. Der Schwellenwert E₁ stellt einen kritischen Winkel in einem Drehzahländerung/Zeit-Diagramm dar, mit dem eine Drehzahl abfallen darf. Ändert sich die Lastdrehzahl n₁ mit einem flacheren Winkel, entspricht dies einem zulässigen Zustand, und der Antriebsmotor kann weiterlaufen. Ist der Abfall steiler, wird dies als Blockierfall erkannt und der Antriebsmotor abgeschaltet. In Block C wird dazu ein Sollwert der Leerlaufdrehzahl n₀ angegeben. In Schritt 220 wird während eines Zeitintervalls T₁ die Zahl der Drehzahlimpulse J₁, die z.B. von einem Drehzahlsensor detektiert werden, bestimmt und abgespeichert. Dann wird in Schritt 230 die aktuelle Lastdrehzahl n₁, wie bei in Schritt 110 des Ausführungsbeispiels in Fig. 4 beschreiben, berechnet. In Schritt 240 wird die zeitliche Ableitung dn₁/dt mit dem Schwellenwert E₁ verglichen. Ist dn₁/dt betragsmäßig größer oder gleich E₁, wird in Schritt 250 der Antriebsmotor abgeschaltet. Ist die zeitliche Ableitung dn₁/dt unterhalb des Schwellenwerts E₁, startet das Verfahren wieder bei Schritt 210. In Schritt 200 können zur Berechnung weitere Parameter eingespeist werden, die Einfluss nehmende physikalische Größen darstellen, etwa Getriebe, Übersetzung, Massenverhältnis und dergleichen. Der kritische Winkel kann über mehrere Zeitintervalle bestimmt werden oder im laufenden Arbeitsvorgang laufend bestimmt werden oder nur zu bestimmten Zeitpunkten. Dies kann bedarfsabhängig angepasst werden.

Generell kann die Bestimmung des Schwellenwerts E₁ kontinuierlich oder auch nur von Zeit zu Zeit durchgeführt werden. Die Zeitintervalle T₁, T₂ sind bedarfsgerecht wählbar und können auch im Arbeitsfall variiert werden.

Weiterhin geht in die Bestimmung des Schwellenwert E₁ eine Soll-Ist-Abweichung eines Drehzahlreglers und/oder ein Ausregelungsgrades des Drehzahlreglers und/oder eine mechanischen Zeitkonstante der Elektrowerkzeugmaschine ein. Die Soll-Ist-Abweichung des Drehzahlreglers bzw. dessen Ausregelungsgrad wird bevorzugt über die Bezugnahme der aktuellen Lastdrehzahl n₁ oder dessen zeitliche Änderung dn₁/dt auf eine Leerlaufdrehzahl n₀ berücksichtigt. Die mechanische Zeitkonstante kann bei unterschiedlichen Einsatzwerkzeugen verschieden sein und beispielsweise sehr günstig bei der Wahl von geeigneten Zeitintervallen T₁, T₂ berücksichtigt werden. Dies kann z.B. über einen Wählschalter in die Steuereinheit der Elektrowerkzeugmaschine eingegeben werden.

## Patentansprüche

1. Verfahren zur Abschaltung eines Antriebsmotors (12) einer Elektrowerkzeugmaschine, welcher ein Werkzeug antreibt, wobei der Antriebsmotor (12) in einem Blockierfall des Werkzeugs abhängig von einem variablen Schwellenwert (E₁) abgeschaltet wird, **dadurch gekennzeichnet, dass** der Schwellenwert (E₁) in zumindest einem vorgegebenen Zeitintervall (T₁) in Abhängigkeit von einer aktuellen Lastdrehzahl (n₁) und einer Leerlaufdrehzahl (n₀) bestimmt wird.

2. Verfahren nach Anspruch 1, **dadurch gekennzeichnet, dass** der Schwellenwert (E₁) in Abhängigkeit von einem Drehzahlverhältnis (n₁/n₀) aus der aktuellen Lastdrehzahl (n₁) und der Leerlaufdrehzahl (n₀) bestimmt wird.

3. Verfahren nach Anspruch 1 oder 2, **dadurch gekennzeichnet, dass** der Schwellenwert (E₁) als Produkt aus dem Drehzahlverhältnis (n₁/n₀) und einem Ausgangswert (E₀) gebildet wird.

4. Verfahren nach Anspruch 1, **dadurch gekennzeichnet, dass** der Schwellenwert (E₁) als auf die Leerlaufdrehzahl (n₀) genormte zeitliche Änderung einer Drehzahl (dn/dt) gebildet wird.

5. Verfahren nach Anspruch 1, **dadurch gekennzeichnet, dass** eine aktuelle Lastdrehzahl (n₁) mit einem lastdrehzahl- und leerlaufdrehzahlabhängigen Werteintervall einer Tabelle verglichen und der neue Schwellenwert (E₁) zugeordnet wird.

6. Verfahren nach Anspruch 5, **dadurch gekennzeichnet, dass** bei niedrigen Lastdrehzahlen (n₁) der Schwellenwert (E₁) abhängig von einem wählbaren Faktor herabgesetzt wird.

7. Verfahren nach einem der vorhergehenden Ansprüche, **dadurch gekennzeichnet, dass** der Schwellenwert (E₁) auf eine ganze Zahl gerundet wird.

8. Verfahren nach einem der vorhergehenden Ansprüche, **dadurch gekennzeichnet, dass** der Schwellenwert (E1) mit einer Soll-Ist-Abweichung eines Drehzahlreglers und/oder einer mechanischen Zeitkonstante der Elektrowerkzeugmaschine und/oder Betriebsparametern der Elektrowerkzeuge gewichtet wird.

9. Verfahren nach einem der vorhergehenden Ansprüche, **dadurch gekennzeichnet, dass** Drehzahlimpulse (J₁, J₂) in zwei aufeinander folgenden ersten und zweiten Zeitintervallen (T₁, T₂) gezählt werden, daraus die Drehzahlen (n₁, n₂) bestimmt werden, die Drehzahl (n₂) des zweiten Zeitintervalls (T₂) von der Drehzahl (n₁) des ersten Zeitintervalls (T₁) abgezogen wird und bei einer Differenz (n₁-n₂) größer als der Schwellenwert (E₁) der Antriebsmotor (12) abgeschaltet wird.

10. Elektrowerkzeugmaschine mit einem durch einen Antriebsmotor (12) antreibbaren Werkzeug, bei dem Mittel vorgesehen sind, um den Antriebsmotor (12) bei blockierendem Werkzeug abhängig von einem variablen Schwellenwert (E₁) abzuschalten, **dadurch gekennzeichnet, dass** die Mittel zumindest eine Detektionseinheit und eine Recheneinheit umfassen und diese Mittel die Bestimmung des Schwellenwertes (E₁) in zumindest einem vorgegebenen Zeitintervall (T₁) in Abhängigkeit von einer aktuellen Lastdrehzahl (n₁) und einer Leerlaufdrehzahl (n₀) durch führen.

11. Elektrowerkzeugmaschine nach Anspruch 10, **dadurch gekennzeichnet, dass** die Mittel einen Mikrokontroller (16) umfassen, der mit einer Drehzahlerfassungseinheit (18) und einem Drehzahlregler verbunden ist, wobei der Schwellenwert (E₁) variabel aus einem Drehzahlsignal und/oder einem Drehzahländerungssignal der Drehzahlerfassungseinheit (18) sowie einer Soll-Ist-Abweichung eines Drehzahlreglers und/oder einer mechanischen Zeitkonstante der Elektrowerkzeugmaschine bestimmbar ist.

12. Elektrowerkzeugmaschine nach Anspruch 10 oder 11, **dadurch gekennzeichnet, dass** die Mittel eine drehzahlbeeinflussende Elektronikeinheit (16) zum Steuern einer Motorspannung und/oder eines Motorstroms umfassen.

## Claims

1. Method for disconnection of a drive motor (12) for an electrical machine tool which drives a tool, with the drive motor (12) being disconnected as a function of a variable threshold value (E₁) in the event of the tool becoming blocked, **characterized in that** the threshold value (E₁) is determined in at least one predetermined time interval (T₁) as a function of an instantaneous load rotation-speed (n₁) and a no-load rotation-speed (n₀).

2. Method according to Claim 1, **characterized in that** the threshold value (E₁) is determined as a function of a rotation-speed ratio (n₁/n₀) from the instantaneous load rotation-speed (n₁) and the no-load rotation-speed (n₀) .

3. Method according to Claim 1 or 2, **characterized in that** the threshold value (E₁) is formed as the product of the rotation-speed ratio (n₁/n₀) and an initial value (E₀).

4. Method according to Claim 1, **characterized in that** the threshold value (E₁) is formed as the rate of change, normalized with respect to the no-load rotation-speed (n₀), of a rotation-speed (dn/dt).

5. Method according to Claim 1, **characterized in that** an instantaneous load rotation-speed (n₁) is compared with a load-rotation-speed-dependent value interval and a no-load-rotation-speed-dependent value interval in a table, and the new threshold value (E₁) is allocated.

6. Method according to Claim 5, **characterized in that**, at low load rotation-speeds (n₁), the threshold value (E₁) is reduced as a function of a selectable factor.

7. Method according to one of the preceding claims, **characterized in that** the threshold value (E₁) is rounded to an integer number.

8. Method according to one of the preceding claims, **characterized in that** the threshold value (E₁) is weighted with any nominal/actual discrepancy from a rotation-speed regulator and/or a mechanical time constant of the electrical machine tool and/or operating parameters of the electrical tools.

9. Method according to one of the preceding claims, **characterized in that** rotation-speed pulses (J₁, J₂) are counted in two successive first and second time intervals (T₁, T₂) the rotation-speeds (n₁, n₂) are determined from this, the rotation-speed (n₂) in the second time interval (T₂) is subtracted from the rotation-speed (n₁) in the first time interval (T₁), and if the difference (n₁-n₂) is greater than the threshold value (E₁), the drive motor 12 is disconnected.

10. Electrical machine tool having a tool which can be driven by a drive motor (12), in which tool means are provided in order to disconnect the drive motor (12) if the tool becomes blocked, as a function of a variable threshold value (E₁), **characterized in that** the means comprise at least one detection unit and one computation unit, and these means determine the threshold value (E₁) in at least one predetermined time interval (T₁) as a function of an instantaneous load rotation-speed (n₁) and a no-load rotation-speed (n₀).

11. Electrical machine tool according to Claim 10, **characterized in that** the means comprise a microcontroller (16) which is connected to a rotation-speed detection unit (18) and to a rotation-speed regulator, in which case the threshold value (E₁) can be determined variably from a rotation-speed signal and/or from a rotation-speed change signal from the rotation-speed detection unit (18) as well as any nominal/actual discrepancy from a rotation-speed regulator and/or a mechanical time constant of the electrical machine tool.

12. Electrical machine tool according to Claim 10 or 11, **characterized in that** the means comprise an electronics unit (16), which influences the rotation speed, in order to control a motor voltage and/or a motor current.

## Revendications

1. Procédé de coupure d'un moteur (12) d'une machine-outil électrique entraînant un outil, le moteur (12) étant coupé en cas de blocage de l'outil, en fonction d'un seuil variable (E₁),
**caractérisé en ce qu'**
on définit le seuil (E₁) dans au moins un intervalle de temps prédéfini (T₁), en fonction de la vitesse de rotation en charge, actuelle (n₁) et la vitesse de rotation à vide (n₀).

2. Procédé selon la revendication 1,
**caractérisé en ce qu'**
on définit le seuil (E₁) en fonction d'un rapport des vitesses de rotation (n_{1/}n₀), correspondant à la vitesse de rotation actuelle en charge (n₁) et la vitesse de rotation à vide (n₀).

3. Procédé selon l'une quelconque des revendications 1 ou 2,
**caractérisé en ce que**
le seuil (E₁) est le produit du rapport des vitesses de rotation (n₁/n₀) et d'une valeur initiale (E₀).

4. Procédé selon la revendication 1,
**caractérisé en ce que**
le seuil (E₁) est formé comme variation d'une vitesse de rotation (dn/dt) en fonction du temps, cette vitesse étant normalisée par rapport à la vitesse de rotation à vide (n₀).

5. Procédé selon la revendication 1,
**caractérisé en ce qu'**
on compare la vitesse de rotation en charge, actuelle (n₁) à un intervalle de valeurs d'un tableau, dépendant de la vitesse de rotation en charge et de la vitesse de rotation à vide et on attribut le nouveau seuil (E₁).

6. Procédé selon la revendication 5,
**caractérisé en ce que**
pour des vitesses de rotation en charge faible (n₁), on diminue le seuil (E₁) en fonction d'un facteur présélectionné.

7. Procédé selon l'une quelconque des revendications précédentes,
**caractérisé en ce qu'**
on arrondit le seuil (E₁) sur un nombre entier.

8. Procédé selon l'une quelconque des revendications précédentes,
**caractérisé en ce qu'**
on pondère le seuil (E₁) avec une différence valeur réelle/valeur de consigne d'un régulateur de vitesse de rotation et/ou d'une constante de temps mécanique de la machine-outil électrique et/ou des paramètres de fonctionnement des outils électriques.

9. Procédé selon l'une quelconque des revendications précédentes,
**caractérisé en ce qu'**
on compte les impulsions de vitesses de rotation (J₁, J₂) dans deux intervalles de temps successifs, un premier et un second intervalle (T₁, T₂), on en déduit les vitesses de rotation (n₁, n₂), on retranche la vitesse de rotation (n₂) du second intervalle (T₂) de la vitesse de rotation (n₁) du premier intervalle de temps (T₁) et en cas d'une différence (n₁-n₂) supérieure au seuil (E₁), on coupe le moteur (12).

10. Machine-outil électrique comportant un moteur (12) entraînant un outil et des moyens pour couper le moteur (12) lorsque l'outil se bloque, en fonction d'un seuil variable (E₁),
**caractérisée en ce que**
les moyens comportent au moins une unité de détection et une unité de calcul et la détermination du seuil (E₁) se fait dans au moins un intervalle de temps prédéfini (T₁) en fonction d'une vitesse de rotation en charge, actuelle (n₁) et d'une vitesse de rotation à vide (n₀).

11. Machine-outil électrique selon la revendication 10,
**caractérisée en ce que**
les moyens comprennent un microcontrôleur (16) relié à une unité de saisie de la vitesse de rotation (18) et à un régulateur de vitesse de rotation, le seuil (E₁) étant défini de manière variable à partir d'un signal de vitesse de rotation et/ou d'un signal de variation de vitesse de rotation de l'unité de saisie de vitesse de rotation (18) ainsi que d'une déviation valeur réelle-valeur de consigne d'un régulateur de vitesse de rotation et/ou d'une constante de temps mécanique de la machine-outil électrique.

12. Machine-outil électrique selon l'une quelconque des revendications 10 ou 11,
**caractérisée en ce que**
les moyens comprennent une unité électronique (16) influençant la vitesse de rotation pour commander la tension du moteur et/ou le courant du moteur.
